# EUROPEAN PATENT SPECIFICATION

(11) **EP 3 510 854 B1**
(45) Date of publication and mention of the grant of the patent: **28.04.2021**
(21) Application number: 19150247.5
(22) Date of filing: 03.01.2019
(51) Int. Cl.: A01D 46/26

(54) **DEVICE FOR HARVESTING FRUIT BY SHAKING TREES**
GERÄT ZUM OBSTERNTEN DURCH SCHÜTTELN DER BÄUME
APPAREIL DE RÉCOLTE DE FRUIT EN SECOUANT LES ARBRES

(30) Priority: 11.01.2018 PL 42425118
(43) Date of publication of application: 17.07.2019
(73) Proprietor: Wachowski, Miroslaw, 24-200 Belzyce (PL)
(72) Inventor: WACHOWSKI, Adam, 24-220 Niedrzwica Duza (PL)
(74) Representative: Kalita, Lucjan

(56) References cited:
- EP-A1- 3 071 012
- FR-A1- 2 905 051
- US-B1- 6 282 878

## Description

The device for harvesting fruit by shaking trees.

The subject of the invention is the device for harvesting the fruit by shaking the trees.

There are known devices for shaking the fruit trees in order to drop the fruits on to the tarpaulin spread under the tree. After shaking the fruits, they are poured from the tarpaulin spread under the tree to other containers, especially the cases adopted for transport.

From PL 216769 B1 patent description the shaker is known for harvesting the fruits, especially sour cherries and the machine for harvesting the fruits, sour cherries especially. The machine revealed in this description contains the support frame equipped in the drive unit with the driving wheels, shaker, belt transporter and hydraulic system. In the front part the frame is equipped in the drawbar adopted for hitching the machine to the agricultural tractor. The machine is equipped in the tarpaulin made of plastic foil which is rolled on the roller located longitudinally on one side of the machine frame and during shaking it is unrolled by the machine operators and laid under the tree which is to be shaken. For driving individual assemblies and devices the machine is equipped in a typical hydraulic system driven by the agricultural tractor to which it is hitched.

The patent description FR 2 905 051 discloses a device for fruits harvesting from trees and bushes containing longitudinal container with a frame, slotted tarpaulin or two tarpaulins unrolled from a roller located above this container as well as a mechanical system for placing the tarpaulins on both sides of a fruit tree. The device contains also a vibration system bound with the device means of transport to the work position. The aforementioned mechanical system for locating the tarpaulins contains a scissors structure which with one side is seated in the frame and coupled with protruding and tilting cylinders. This structure on the second, end side is equipped in a clipping crossbar to which the tarpaulin edge is clipped. The scissors structure is composed of pivotally connected elements. Due to the protrusion cylinder action the scissors structure is folded and simultaneously the front crossbar is protruded and at the same time unrolling of the clipped tarpaulin occurs. Action of this cylinder in the other direction is causing rolling of the tarpaulin. Due to the tilting cylinder action the scissors structure and connected to it tarpaulin at the same time are lifted or lowered. Fruits harvesting relies on shaking trees with use of the vibration system in result of which fruits are falling on the tarpaulins located under trees and from there to the longitudinal container.

The other solution known from the art is the machine for harvesting the fruits presented in RCD 001689308-0002 community design showing the machine similar to the described above. The machine according to this solution is equipped additionally in the plastic foil tarpaulin retractor located parallelly to the belt conveyor and the device for cleaning the fruits before pouring them into the case located on the rear platform. The device for cleaning is a blower type device. In this known from the art device there are also the jaws catching the fruit tree-trunk and making the tree to vibrate with use of the inertial vibrator. Used jaws are two rubber blocks of parallel planes mounted swivel on the pivots whereby the movable jaw is moved towards the fixed jaw.

Starting the fruits shaking, with use of the devices presented above, requires, beside fixing the shaker jaws on the tree trunk or branch, unrolling the tarpaulin and lying it under the tree to be shaken. Performing this activity requires engagement of the operating personnel. After shaking the operating personnel is lifting the tarpaulin edge which is causing relocation of the shaken fruits onto the belt conveyor and then hold the tarpaulin edge which is at this time subject to rolling onto the device roller. Involvement of the operating people is some inconvenience of the presented devices. Moreover, the unfavorable feature is also this, that the tarpaulin lying directly on the ground transfers its properties, especially the hardness, which unfavorably influences eventual mechanical damages.

The problem for solution is achieving the device for the fruits harvesting by shaking, in which operating personnel will be minimized.

This problem is solved by a device containing a support frame equipped with a drive unit and a drawbar adopted for hitching to an agricultural tractor and a shaker is built on the support frame, a shaft with a rolled tarpaulin and a belt conveyor mounted longitudinally beside the shaft with a cleaner blower and then a grate for placing the cases, whereby the working assemblies built on the support frame are generally equipped with the hydraulic motors supplied from a pump driven by the power take-off shaft of the agricultural tractor. The device which consists of the above-mentioned assemblies and mechanisms according to the invention contains a tarpaulin laying assembly consisting of a body and a tarpaulin guide. The body consists of two identical housings and each one of them has the side walls and structural elements with which those housings are fitted to the support frame. In both side walls the pivots with upper rollers and lower rollers are mounted through but on each side wall the side pivots with the side rollers are mounted. Moreover, on one of the side walls of each housing the base with the hydraulic motor is mounted driving a toothed wheel mounted on a shaft between the side walls. The tarpaulin guide consists of two bars and each one of them is made of a pipe beam of a cross section close to a rectangle. On one wall of each beam, longitudinally and in the symmetry plane a toothed rack is fitted. At the end of each of two bars a fastener is fitted with a pin fitted to it. The tarpaulin edge is threaded on two pins fitted to the fasteners. Moreover, each bar of the guide, in the device ready for work, is slide into the channel created by the cylindrical surfaces of the upper rollers, lower rollers and side rollers and simultaneously the toothed rack engages with the toothed wheel.

This toothed wheel is mounted and keyed directly on the hydraulic motor shaft. In the variant solution the toothed wheel is mounted and keyed on the bearing equipped shaft between the side walls and coupled with the hydraulic motor shaft. The bar of the guide has in its symmetry plane, which is in the plane passing through the symmetry axes of the upper wall and lower wall, the shape of an arc of external radius contained in range of 2000 to 4500 mm. The toothed rack fitted to the lower plane of the guide bar has the arc of the same radius. Upper ends of the bars are connected with the fastener which is causing equal moving of both bars and simultaneously equal unrolling of the tarpaulin.

Each of the bar consists of two parts, upper and lower, connected with each other with use of the bolts and around one of it the lower part can be laid on the upper part. Laying the lower part on the upper part reduces width dimensions which makes moving the machine easier.

The upper rollers and lower rollers pivots and side pivots of the side rollers have interlocks with the bolt adjustment of those rollers shift. This allows for a precise establishing of the dimensions of created this way channel in which the bar is slid in which makes that the bar slides freely in the channel without jamming. The bar created from the pipe beam of the cross section close to the rectangle moves in the channel which cross section is established by the contact surfaces to the upper rollers, lower rollers and side rollers cylindrical surfaces. The bolt adjustment is also necessary to achieve proper amount of pitch of the cooperating pair: toothed wheel - toothed rack.

The device according to the invention allows for mechanized shaking and harvesting shaken fruits. Driving of the device along the rows of growing trees is possible thanks to that the bars are moved up. After approaching under the tree, the operator from the tractor cabin moves the bars which with use of the pins unroll the tarpaulin rolled on the shaft. After moving the tarpaulin under the tree, the operator moves the shaker closing it jaws on the tree-trunk or branch. Then the operator activates the shaking head causing the fruits to be shaken. Then the shaker jaws are released and the shaker relocated whereby the bars retracting is turned on and simultaneously the tarpaulin is rolled on the shaft and the fruits collected in the tarpaulin are relocated from the tarpaulin to the belt conveyor of the device and further after cleaning poured to the placed case. Entire process is mechanized and does not require presence of additional operators.

The subject of the invention is visualized in the sample embodiment on the figure on which:

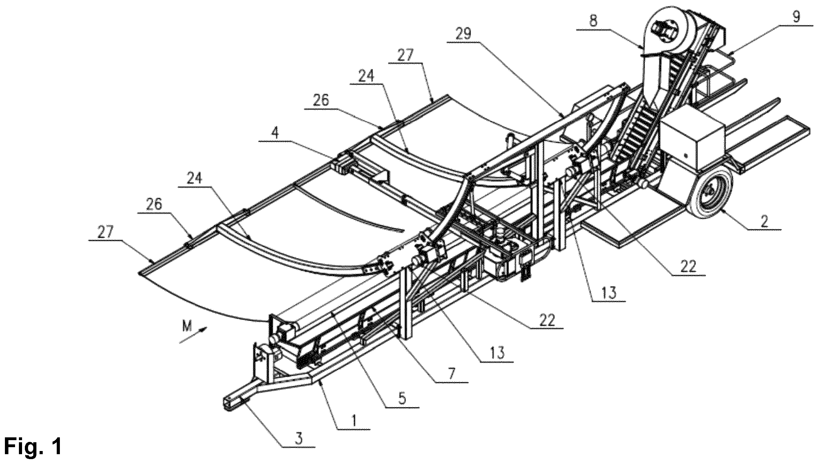

Fig. 1 presents the device in the perspective view,

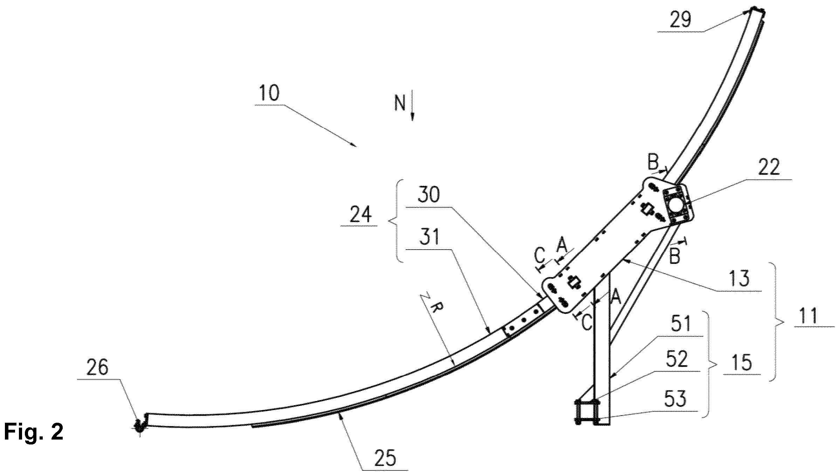

Fig. 2 presents the tarpaulin laying assembly in the side view in M arrow direction marked on Fig 1,

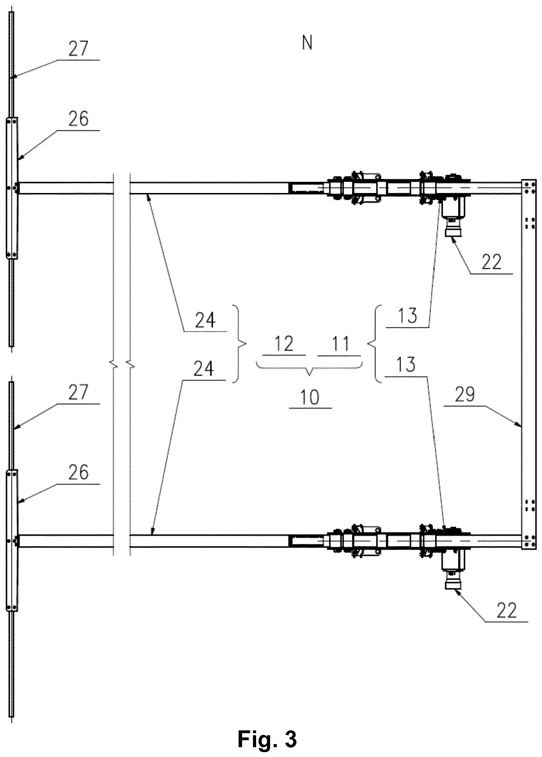

Fig. 3 presents the tarpaulin laying assembly in the top view in the N arrow direction marked on Fig. 2,

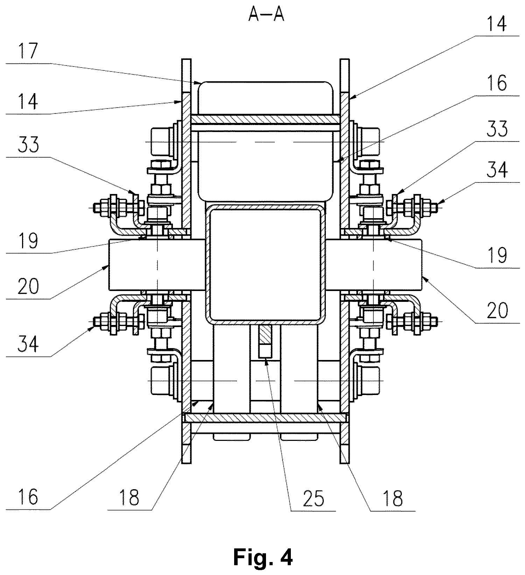

Fig. 4 presents the housing (13) cross section along A-A line marked on Fig. 2,

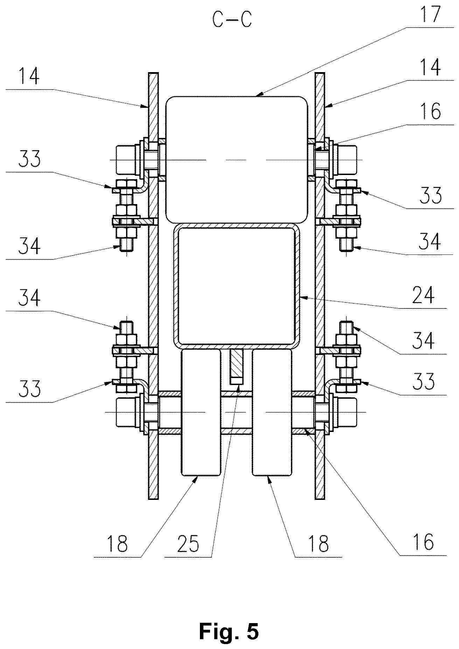

Fig. 5 presents the housing (13) cross section along C-C line marked on Fig. 2,

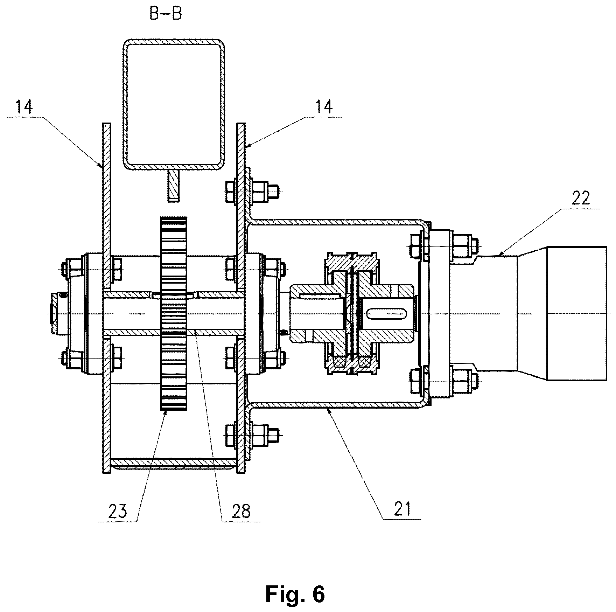

Fig. 6 presents the housing (13) cross section along B-B line marked on Fig. 2,

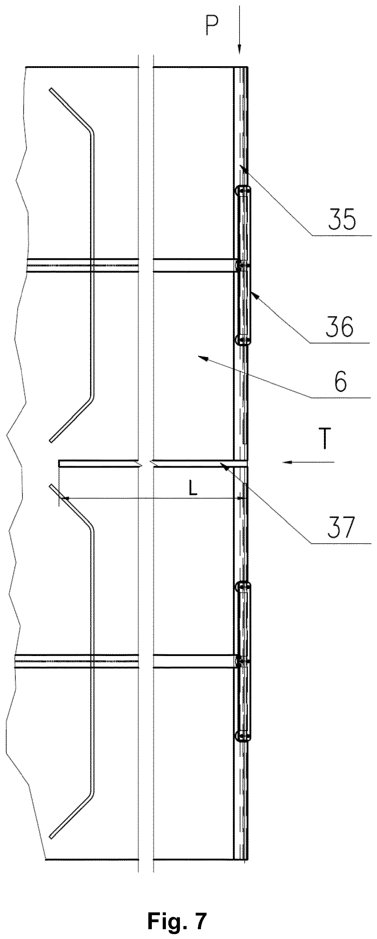

Fig. 7 presents the edge part of the tarpaulin (6) put on the pins (27),

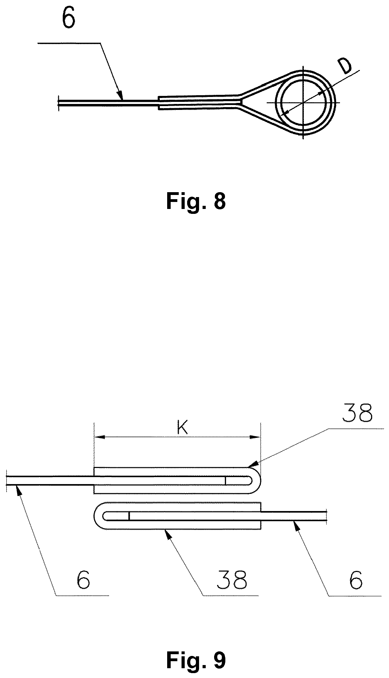

Fig. 8 presents the tarpaulin (6) edge finish in P view marked on Fig. 7,
Fig. 9 presents the edge finish of the middle part of the tarpaulin (6) in T view marked on Fig. 7.

### Example

The device for harvesting the fruits by shaking the trees contains the support frame 1 equipped with the drive unit 2 and drawbar 3 adopted for hitching to the agricultural tractor. On the support frame built are the shaker 4, shaft 5 with rolled tarpaulin 6 and beside this shaft 5 the belt conveyor 7 with the cleaner 8 are longitudinal mounted and further the grate 9 for placing the cases for the fruits. The work assemblies built on the support frame 1 are equipped generally with the hydraulic motors supplied from the pump driven by the power take-off shaft of the agricultural tractor. The device according to the invention additionally contains a tarpaulin 6 laying assembly 10 which consists of the body 11 and tarpaulin 6 guide 12. The body 11 consists of two housings 13 and each one of them has the side walls 14 and structural elements 15 with which and fasteners, which are the bolts, washers and nuts, those housings 13 are fitted to the support frame 1. The structural elements 15 are the column 51 attached to the housing 13 and plate 52 attached to the column 51 as well as pressure plate 53 which presses the support frame 1 element when tightening the bolts. Through the side walls 14 the pivots 16 with upper rollers 17 and lower rollers 18 are mounted. Whereas on each side wall 14 the side pivots 19 with side rollers 20 are mounted. Moreover, on one of the side walls 14 of each housing 13 the base 21 with the hydraulic motor 22 is mounted driving the toothed wheel 23 mounted on the shaft between the side walls 14. The guide 12 consists of two bars 24 and each one of them is created from the pipe beam of square cross section of 80 x 80 mm dimensions and 2 mm wall thickness. Longitudinally, on one, lower wall of this beam, in the symmetry plane, the toothed rack 25 with 2009 tooth is fitted on module m4 made of 8 mm thick steel sheet. At the end of each from two bars 24 the fastener 26 is fitted with the pin 27 attached to it and on two pins 27 attached to the fasteners 26 the tarpaulin 6 edge is threaded. Moreover, each of the bar 24 of the guide 12 is inserted into the channel created by cylindrical surfaces of the upper rollers 17, lower rollers 18 and side rollers 20. The toothed rack 25 inserted in created this way channel engages with the toothed wheel 23.

In the embodiment the toothed wheel 23 is mounted on the bearing equipped shaft 28 between side walls 14 and coupled with the hydraulic motor shaft 22. Such bearing arrangement of the shaft 28 excludes possibility of the side force presence during the toothed wheel 23 cooperation with the toothed rack 25 which could be a reason of jamming the bar 24.

The bar 24 has in its symmetry plane the shape of an arc of external radius R equal 4000 mm. Such shape of the bar is optimal for the tarpaulin 6 guiding which partly - before shaken tree - is located just above the ground, and in the tarpaulin 6 fastening on the height of about 250 mm. The same radius R is contained by the toothed rack 25 surface which contacts with lower plane of the bar 24 and is attached to it.

The upper ends of the bars 24 are connected with the connector 29 which is causing that both bars 24 are rigidly connected with each other and thanks to this, although the separate drive with use of the toothed wheels 23 both move uniformly and uniformly stretch attached tarpaulin 6.

Each of the bar 24 consists of two parts, upper 30 and lower 31, connected with each other with use of the bolts 32 and around one of it the lower part 31 can be laid on the upper part 30. In the embodiment the pivot 32 is one of the bolts connecting both parts. Making the bar 24 from two parts: upper 30 and lower 31, and connecting them articulated joint with use of one of the bolts, which simultaneously is a pivot, makes the device passing easier which after putting off one of the bars 31 has smaller overall dimensions. The pivots 16 of the upper rollers 17 and lower rollers 18 and side pivots 19 of the side rollers 20 have interlocks 33 with the adjustment bolt 34 of the upper rollers 17, lower rollers 18 and side rollers 20 shift. The bolt adjustment 34 contains the angle bar 54 in which hole on one arm the pivot 16 or side pivot (19) is mounted and in the hole in the other arm the bolt 55 is screwed passing through the hole in the interlock 33 in the form of the plate attached to the housing 13 side wall, whereby on this bolt 55 from one and the other side of the plate the nuts 56 are screwed. The pivot 16 or 19 position adjustment relays on moving the angle bar 54 by mutual movement of screwed nuts 56.

The tarpaulin 6 used in the device has sewed on belt 35 which is creating the longitudinal hole on the edge of diameter D equal 40 mm adopted for sliding in the pin 27. In the fitting places of the latch 26 to the pin 27 the tarpaulin 6 has the unwrap 36 through which you can uncouple the latches 26 and remove the tarpaulin from the device. In the half of the edge length the tarpaulin 6 has a cutting slot 37 of length L equal 2700 mm and tails 38 of this cutting slot 37 overlap on each other on K width equal 100 mm. Such shape of the tarpaulin 6 edge with cutting slot 37 allows for easy sliding the tarpaulin 6 under shaken tree and overlapping tails 38 are embracing shaken tree.

In the variant solution of the machine the toothed wheel 23 is mounted directly on the hydraulic motor 22 shaft.

## Claims

1. A device for harvesting by shaking trees, containing a support frame (1) equipped with a drive unit (2) and a drawbar (3) adopted for hitching to an agricultural tractor, on which a shaker (4), a shaft (5) with a rolled tarpaulin (6) are built and beside this shaft (5) a belt conveyor (7) is mounted longitudinally with a cleaner blower (8) and further a grate (9) for placing the cases, whereby work assemblies built on the support frame (1) are equipped with hydraulic motors supplied from a pump driven by a power take-off shaft of the agricultural tractor, **characterized in that**, the device contains a tarpaulin (6) laying assembly (10) consisting of a body (11) and a tarpaulin (6) guide (12), whereby the body (11) consists of two housings (13) and each one of them has side walls (14) and structural elements (15), with use of which those housings (13) are fitted to the support frame (1) and through the side walls (14), pivots (16) are mounted with upper rollers (17) and lower rollers (18), whereas on each side wall (14), side pivots (19) are mounted with side rollers (20) and moreover, on one side wall (14) of each of the housing (13) a base (21) is mounted with a hydraulic motor (22) driving a toothed wheel (23) mounted on a shaft between the side walls (14), whereas the guide (12) consists of two bars (24) and each one of them is created from a pipe beam of the cross section close to a rectangle, whereas longitudinally, on one, lower wall of each beam, in the symmetry plane a toothed rack (25) is attached and at the end of each of two bars (24) a fastener (26) is attached with a pin (27) attached to it and on two pins (27) attached to the fasteners (26) the tarpaulin (6) edge is threaded and moreover, each of the guide (12) bars (24) is slid into the channel created by the cylindrical surfaces of the upper rollers (17), lower rollers (18) and side rollers (20) and the toothed rack (25) engages the toothed wheel (23).

2. The device according to claim 1, **characterized in that**, the toothed wheel (23) is mounted on the hydraulic motor (22) shaft.

3. The device according to claim 1, **characterized in that**, the toothed wheel (23) is mounted on a bearing equipped shaft (28) between the side walls (14) coupled with the hydraulic motor (22) shaft.

4. The device according to claim 2 or 3, **characterized in that**, the bar (24) has in its symmetry plane shape of the arc of internal radius (R) in range of 2000 to 4500 mm and simultaneously the same radius (R) contains the toothed rack (25) surface which contacts with the lower bar (24) surface and is attached to it.

5. The device according to claim 4, **characterized in that**, the upper ends of bars (24) are joined with a fastener (29).

6. The device according to claim 5, **characterized in that**, each of the bars (24) consists of two parts, upper (30) and lower (31), connected with each other with use of bolts (32) and around one of those bolts (32) lower part (31) can be placed on the upper part (30).

7. The device according to claim 6, **characterized in that**, the pivots (16) of the upper rollers (17) and lower rollers (18) and side pivots (19) of the side rollers (20) have interlocks (33) with the adjustment bolt (34) of the upper rollers (17), lower rollers (18) and side rollers (20) shift.

## Patentansprüche

1. Vorrichtung zur Obsternte durch Schütteln, bestehend aus einem Tragrahmen (1) mit einem Fahrbausatz (2) und einem Deichsel (3) zum Ankoppeln an ein Traktor, an welchen Schüttelmaschine (4), Welle (5) mit aufgewickelter Plane (6) montiert sind und neben der Welle (5) längs ein Förderband (7) mit Reinigungsgebläse (8) und weiter der Rost (9) für Kisten angeordnet sind, wobei die am Tragrahmen (1) verbauten Arbeitsbausätze grundsätzlich mit Hydraulikmotoren ausgerüstet sind, die durch eine über den Nebenabtrieb des Traktors angetriebene Pumpe versorgt werden, **dadurch gekennzeichnet, dass** der sie über den Bausatz (10) der Verlegung der Plane (6) bestehend aus dem Körper (11) und der Führung (12) der Plane (6) verfügt, wobei der Körper (11) aus zwei Gehäusen (13) zusammengestellt und jedes über seitliche Wände (14) und Bauteile (15) verfügt, über welche diese Gehäuse (13) am Tragrahmen befestigt sind (1) und in den seitlichen Wänden (14) durchgehend Bolzen (16) mit den oberen Rollen (17) und unteren Rollen (18) angeordnet sind und an jeder seitlichen Wand (14) die seitlichen Bolzen (19) mit den seitlichen Rollen (20) befestigt sind, wobei an einer seitlichen Wand (14) des jeweiligen Gehäuses (13) sich der Grundkörper (21) mit dem Hydraulikmotor (22) befindet, der das Zahnrad (23) an der Welle zwischen den seitlichen Wänden (14) antreibt, wobei die Führung (12) aus zwei Leisten (24) besteht und jede Leiste aus einem rechteckigen Rohr besteht, wobei längs, an einer, unteren Wand des Rohrs, in der Symmetrieebene, sich die Zahnleiste (25) befindet und am Ende der beiden Leisten (24) der Haken (26) mit Knebel (27) angeordnet ist und an zwei Knebeln (27) an Haken (26) der Rand der Plane (6) eingefädelt ist und jede Leiste (24) der Führung (12) in einen Kanal eingeführt ist, der durch die zylindrischen Flächen der oberen Rollen (17), unteren Rollen (18) und seitlichen Rollen (20) gebildet ist, wobei die Zahnleiste (25) mit dem Zahnrad (23) verzahnt ist.

2. Vorrichtung nach Anspruch 1, **dadurch gekennzeichnet, dass** das Zahnrad (23) an der Welle des Hydraulikmotors (22) gelagert ist.

3. Vorrichtung nach Anspruch 1, **dadurch gekennzeichnet, dass** das Zahnrad (23) an der Welle (28) gelagert ist, die zwischen den Zeitenwänden (14) gelagert und mit der Welle des Hydraulikmotors (22) gekoppelt ist.

4. Vorrichtung nach Anspruch 2 oder 3, **dadurch gekennzeichnet, dass** die Leiste (24) in ihrer Symmetrieebene die Form eines Bogens mit einem Außenradius von 2000 bis 4500 mm aufweist und der gleiche Radius (R) in der Fläche der Zahnleiste (25) enthalten ist, welche Kontakt mit der unteren Seite der Leiste (24) hat und daran befestigt ist.

5. Vorrichtung nach Anspruch 4, **dadurch gekennzeichnet, dass** die oberen Enden der Leisten (24) mittels des Verbindungsstücks (29) verbunden sind.

6. Vorrichtung nach Anspruch 5, **dadurch gekennzeichnet, dass** jede der Leisten (24) aus zwei Teilen, dem oberen (30) und dem unteren (31) besteht, welche miteinander über Schrauben (32) verbunden sind und um eine dieser Schrauben (32) der untere Teil (31) auf den oberen Teil (30) abgelegt werden kann.

7. Vorrichtung nach Anspruch 6, **dadurch gekennzeichnet, dass** die Bolzen (16) der oberen Rollen (17) und unteren Rollen (18) sowie die seitlichen Bolzen (19) der seitlichen Rollen (20) über Arretierungen (33) mit Schraubregelung (34) der Verschiebung der oberen Rollen (17), unteren Rollen (18) und seitlichen Rollen (20) verfügen.

## Revendications

1. Le dispositif de cueillette des fruits, par secouage des arbres, comprenant un cadre de support (1) équipé d'un train roulant (2) et d'un timon (3) adapté pour être attelé au tracteur agricole, sur lequel est intégré le secoueur (4), un arbre (5) avec une bâche (7) enroulée, et à côté de cet arbre un convoyeur à bande (7) avec une soufflerie du dispositif de nettoyage (8) est incorporé longitudinalement et, plus loin, une grille (9) pour la mise en place des caisses, les unités de travail, intégrées sur le cadre de support (1), étant essentiellement équipées de moteurs hydrauliques alimentés par une pompe entraînée par la prise de force du tracteur agricole, **caractérisé en ce qu'**il comprend une unité (10) de mise en place de bâche (6) composée d'un corps (11) et d'un guide (12) de la bâche (6), le corps (11) étant assemblé à partir de deux boîtiers (13), dont chacun d'eux a des parois latérales (14) et des éléments structurels (15), à l'aide desquels ces boîtiers (13) sont fixés au cadre de support (1) et à travers les parois latérales (14), des axes (16) avec des rouleaux supérieurs (17) et des rouleaux inférieurs (18) sont incorporées dans les parois latérales (14), tandis que sur chaque paroi latérale (14), des axes latérales (19) avec des rouleaux latéraux (20) sont incorporées, sur une paroi latérale (14) de chaque boîtier (13), un socle (21) avec un moteur hydraulique (22) entraînant la roue dentée (23) incorporée sur un arbre entre les parois latérales (14) est incorporée, tandis que le guide (12) est constitué de deux barres (24), chacune d'entre elles étant constituée d'une poutre tubulaire de section proche du rectangle, sur l'une paroi, inférieure de ce poutre, dans le plan de symétrie, une barre dentée (25) étant fixée longitudinalement et, à l'extrémité de chacune des deux barres (24), le crochet (26) avec une broche (27) qui y est attachée est fixé et le bord de la bâche (6) est tiré sur les deux broches (27) fixé aux crochets (26), chacune des barres (24) du guide (12) est insérée dans un canal formé par les surfaces cylindriques des rouleaux supérieurs (17), des rouleaux inférieurs (18) et des rouleaux latéraux (20), et la barre dentée (25) s'emboîte avec la roue dentée (23).

2. Le dispositif selon la revendication 1, **caractérisé en ce que** la roue dentée (23) est incorporée sur l'arbre du moteur hydraulique (22).

3. Le dispositif selon la revendication 1, **caractérisé en ce que** la roue dentée (23) est incorporée sur un arbre (28), monté sur palier entre les parois latérales (14), couplé à l'arbre du moteur hydraulique (22).

4. Le dispositif selon la revendication 2 ou 3, **caractérisé en ce que** la barre (24) a dans son plan de symétrie la forme d'un arc avec un rayon extérieur (R) compris entre 2000 et 4500 mm et en même temps le même rayon (R) est compris dans la surface de la barre dentée (25), qui est en contact avec la surface inférieure de la barre (24) et est fixée à celle-ci.

5. Le dispositif selon la revendication 4, **caractérisé en ce que** les extrémités supérieures des barres (24) sont fixées avec un connecteur (29).

6. Le dispositif selon la revendication 4, **caractérisé en ce que** chacune des barres (24) se compose de deux parties, la partie supérieure (30) et la partie inférieure (31) reliées entre elles au moyen de vis (32), et autour de l'une de ces vis (32), la partie inférieure (31) peut être posée sur la partie supérieure (30).

7. Le dispositif selon la revendication 4, **caractérisé en ce que** les axes (16) des rouleaux supérieurs (17) et des rouleaux inférieurs (18), ainsi que les axes latéraux (19) des rouleaux latéraux (20) comportent des verrous (33) avec réglage par vis (34) pour le déplacement des rouleaux supérieurs (17), des rouleaux inférieurs (18) et des rouleaux latéraux (20).
